Europäisches Patentamt

European Patent Office

Office européen des brevets

(19)

(11) Veröffentlichungsnummer: **0 237 726**
**A1**

# (12) EUROPÄISCHE PATENTANMELDUNG

(21) Anmeldenummer: **87100877.7**

(22) Anmeldetag: **22.01.87**

(51) Int. Cl.⁴: **A01G 5/04**

(30) Priorität: **20.03.86 DE 3609406**

(43) Veröffentlichungstag der Anmeldung:
**23.09.87 Patentblatt 87/39**

(84) Benannte Vertragsstaaten:
**AT BE CH DE ES FR GB IT LI NL SE**

(71) Anmelder: **Hch. Sieger Papier- und
Wellpappenwerke KG Zülpich
Bessenicher Weg
D-5352 Zülpich(DE)**

(72) Erfinder: **Fischer, geb. Bertram, Ursula
An Gut Nazareth 14
D-5160 Düren(DE)**
Erfinder: **Nahrath, Günter, Dipl.-Ing. (F.H.)
Kösliner Strasse 48
D-5350 Euskirchen(DE)**

(74) Vertreter: **Schwarz, Klaus-Jürgen, Dipl.-Ing.
Adenauerallee 46a
D-5300 Bonn 1(DE)**

(54) **Kernkörper für Pflanzen- und Blumengebinde, insbesondere Kränze, und Verfahren zu dessen Herstellung.**

(57) Der Kernkörper für Pflanzen-und Blumengebinde ist insbesondere für Kränze geeignet und besteht aus einer in mehreren ringförmigen, fest miteinander verbundenen Lagen angeordneten Wellpappe. Dies ist ein gut verrottbares, organisch abbaubares, recyclingfähiges und damit umweltfreundliches Material. Der Kernkörper (1) kann dabei aus einem fortlaufenden bandförmigen Streifen von einseitiger Wellpappe mit einem halbkreisförmigen oder runden bzw. ovalen Querschnitt gewickelt werden und wird anschließend mit einem Kreppapier umwickelt oder umschlagen.

FIG.11

EP 0 237 726 A1

## Kernkörper für Pflanzen-und Blumengebinde, insbesondere Kränze, und Verfahren zu dessen Herstellung

Die Erfindung betrifft einen Kernkörper für Pflanzen-und Blumengebinde, der insbesondere für Kränze geeignet ist, nach dem Oberbegriff des Anspruches 1 und bezieht sich ferner auf Verfahren zum Herstellen solcher Kernkörper.

Kernkörper für Pflanzen-und Blumengebinde, insbesondere Kränze, die auch als Kranzrohlinge oder Kranzrömer bezeichnet werden, werden grundsätzlich nach zwei unterschiedlichen Verfahren hergestellt. Entweder werden die Kernkörper aus verrottbaren Naturstoffen, wie Stroh, Holzwolle, Strohfaser, Strohflor, aufgeschlossenem Altpapier, Rohpappe oder dergleichen gepreßt und gegebenenfalls unter Verwendung eines Bindemittels in Ringform oder in eine andere geeignete Form gebracht, um anschließend mit Kreppapier, Kunststoffband oder einem anderen geeigneten Material umwickelt zu werden.

Zum anderen werden solche Kernkörper aus ringförmigen Papp-oder Kunststoffschalen zusammengefügt oder großtechnisch in relativ komplizierten Anlagen aus Schaumstoffen geformt. Als Schaumstoff kommen Polystyrol und Polyurethan zum Einsatz.

Die Herstellung der Kernkörper aus z.B. Stroh ist äußerst arbeitsintensiv und kostenaufwendig, während die Nachteile der Schaumstoffkränze hauptsächlich in der Nichtverrottbarkeit der verwendeten Materialien auf Mülldeponien liegen. Bei der Vernichtung der Schaumstoffkränze in Müllverbrenungsanlagen können schädliche Gase entstehen. Auch wenn die Schaumstoffkränze geshreddert werden, sind sie nicht biologisch abbaubar.

Die von Hand aus verrottbaren Naturstoffen hergestellten Kränze, wie die Strohkränze, sind sehr ungleichmäßig und haben eine zu geringe Biegesteifigkeit, während für die Herstellung von Kernkörpern aus ringförmigen Papp-oder Kunststoffschalen teuere Formmaschinen erforderlich sind, die für jede Kranzgröße einen besonderen, kostspieligen Formensatz benötigen.

Sowohl die von Hand als auch die fabrikmäßig hergestellten Kränze werden nach dem Wickeln mit einem Kunststoffaden zusammengebunden und dann mit einer Wickelfolie umwickelt.

Der Erfindung liegt die Aufgabe zugrunde, solche Kernkörper für Pflanzen-und Blumengebinde, insbesondere Kränze, aus einem umweltfreundlichen Material herzustellen, das so beschaffen ist, daß es sich zu den unterschiedlichsten Größen von Kernkörpern in möglichst einfacher und damit kostensparender Weise maschinell verarbeiten läßt und nach seiner Verwendung in einfacher Weise einer umweltfreundlichen Vernichtung zugeführt werden kann.

Diese Aufgabe wird erfindungsgemäß im wesentlichen durch den Anspruch 1 gelöst, während besonders vorteilhafte Weiterbildungen der Erfindung in den Ansprüchen 2 bis 10 gekennzeichnet sind und sich die Ansprüche 11 bis 18 auf Verfahren zum Herstellen solcher Kernkörper beziehen.

Wellpappe eignet sich ganz besonders gut für die Herstellung solcher Kernkörper, denn sie ist verrottbar, organisch abbaubar, recyclingfähig und damit umweltfreundlich.

Ihr Einsatz erfolgt in flächigen oder streifenförmigen Bahnen, die formbar, das heißt entweder spiralförmig oder parallel wickelbar und faltbar sind. Die Wellpappenlagen werden stellenweise miteinander verklebt, so daß sich ein äußerst formsteifes Gebilde ergibt, das jedoch ein vergleichsweise geringes Raumgewicht hat und sich daher besonders leicht handhaben läßt. Auch trägt der poröse Aufbau des Kernkörpers zu einer raschen Verrottung bei.

Von besonderem Vorteil ist auch die Herstellung der Kernkörper aus fortlaufend zugeführten Wellpappenstreifen, wodurch eine rein maschinelle Herstellung solcher Kernkörper in den unterschiedlichsten Größen in Serienproduktion möglich wird. Durch die Ausbildung des Formzylinders mit radialen Saugöffnungen kann das Kreppapier zum Umwickeln des Kernkörpers gleich zu Beginn des Wickelvorganges mit dem Kernkörper verbunden und nach Beendigung des Wickelvorganges von innen nach außen um den Kernkörper herumgeschlagen werden. Hierduch wird ein zusätzlicher Wickelvorgang für das Kreppapier in besonders einfacher Weise vermieden.

Ausführungsbeispiele der Erfindung sind in der Zeichnung schematisch dargestellt. Es zeigen

Fig. 1 ein erstes Ausführungsbeispiel eines Verfahrens zum Spiralwickeln von rohrförmigen Körpern zum Formen von Kernkörpern für Kränze oder dergleichen,

Fig. 2 die Formung eines nach dem Verfahren von Fig. 1 hergestellten rohrförmigen Körpers zu einem Tragkörper in perspektivischer Darstellung,

Fig. 3 einen Schnitt durch den Formvorgang gemäß Schnittlinie III -III von Fig. 2,

Fig. 4 ein anschließendes spiralförmiges Umwickeln des Tragkörpers mit einem Wellpappenstreifen,

Fig. 5 einen Schnitt durch den nach diesem Verfahren hergestellten fertigen Kernkörper oder Kranzrohling,

Fig. 6 einen gerillten Wellpappenbogen zur Herstellung eines Kernkörpers oder Kranzrohlings nach einem gegenüber Fig. 1 bis 5 abgewandelten zweiten Verfahren,

Fig. 7 den gerillten Wellpappenbogen von Fig 6 nach teilweiser Auffaltung quer zur Rillung,

Fig. 8 eine perspektivische Ansicht des zu einem länglichen Formkörper vollständig aufgefalteten Wellpappenbogens,

Fig. 9 einen Wickelvorgang, um den aufgefalteten Formkörper von Fig. 8 in eine Ringform zu bringen,

Fig. 10 das Umwickeln des nach dem Verfahren von Fig. 6 bis 9 hergestellten ringförmigen Kernkörpers mit weiterem streifenförmigen Wellpappenmaterial oder mit verrottbarem streifenförmigen Kreppapier oder dergleichen,

Fig. 11 ein weiteres Verfahren zur Herstellung von Kernkörpern für Kranzrohlinge oder dergleichen durch zylindrisches Wickeln aus zwei Wellpappenstreifen mit unterschiedlicher Breite um einen Formzylinder,

Fig. 12 eine gegenüber Fig. 11 vergrößerte Teildarstellung dieses Aufrollverfahrens in einem Anfangsstadium,

Fig. 13 eine Darstellung des Aufrollverfahrens entsprechend Fig. 12 in einem Endstadium,

Fig. 14 das Umwickeln des nach dem Verfahren von Fig. 11 bis 13 hergestellten Kernkörpers mit verrottbarem Kreppapier,

Fig. 15 ein weiteres abgewandeltes Ausführungsbeispiel eine Aufrollverfahrens mit zylindrischem Wickeln eines Kernkörpers aus einem einseitigen Wellpappenstreifen zunänchst zunehmender und anschließend wieder abnehmender Streifenbreite,

Fig. 16 eine schematische Draufsicht auf den für das Aufrollverfahren von Fig. 15 verwendeten Wellpappenstreifen im Schnittbild nach Schrägschneiden aus einem Wellpappenstreifen bestimmter gleichbleibender Breite,

Fig. 17 eine schematische Darstellung des Aufbaues eines Kernkörpers aus einem solchen Wellpappenstreifen wechselnder Breite ein einem Anfangsstadium des Aufrollvorganges,

Fig. 18 eine Darstellung des Endstadiums dieses Aufrollvorganges in einer Darstellung entsprechend Fig. 17 und

Fig. 19 das Umwickeln eines nach dem Verfahren von Fig. 15 bis Fig. 18 hergestellten Kernkörpers mit verrottbarem Kreppapier.

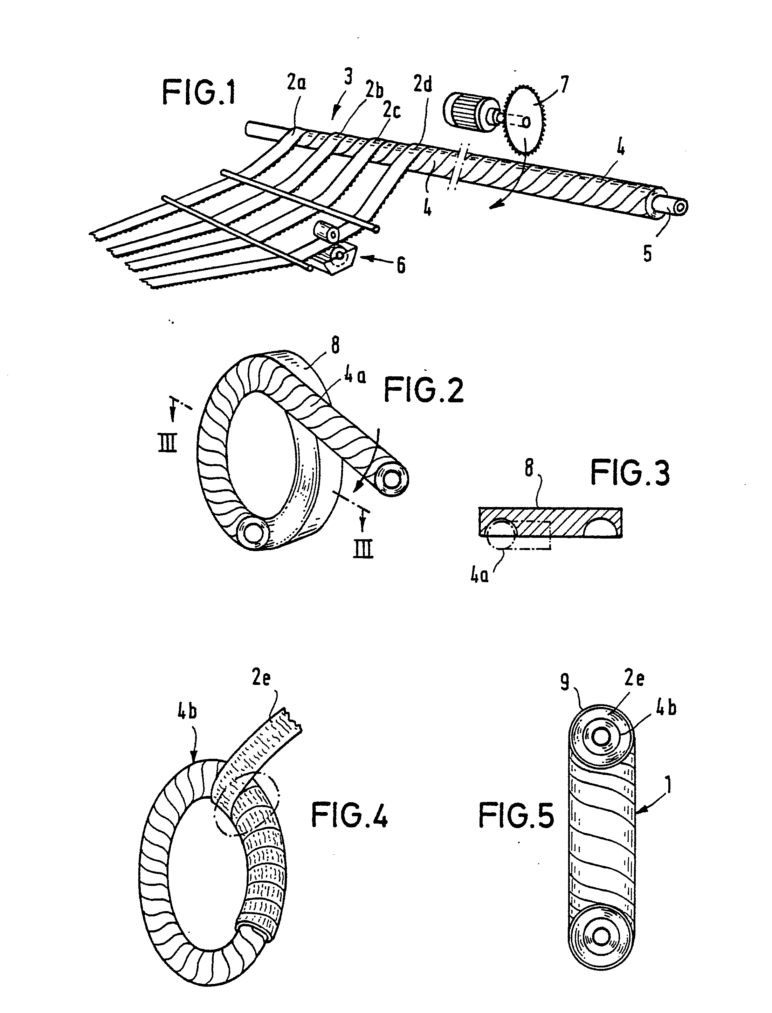

Bei dem in Fig. 1 bis 5 gezeigten Verfahren zum Spiralwickeln eines Tragkörpers für einen Kernkörper 1 aus mehreren Streifen 2a, 2b, 2c, 2d gleichbleibender Breiten kommt eine einseitige Wellpappe mit einer Wellenhöhe von etwa 2,5 bis 3,8 mm. zum Einsatz, die in etwa 1 m breiten Rollen angeliefert und auf eine Breite von 50 mm in Streifen geschnitten wird. Diese Streifen 2a, 2b, 2c, 2d laufen in eine Spiralwickelmaschine 3 ein und werden zü einer rohrförmigen Hülse 4 gewickelt, deren Innendurchmesser bei etwa 3 cm liegt und vom Durchmesser des Wickeldorns 5 der Spiralwickelmaschine bestimmt wird. Es werden beispielsweise drei oder vier Bahnen in nebeneinander angeordneten Leimwerken 6 einseitig beleimt und in der geschilderten Weise - schraubenlinienförmig aufgewickelt. Eine mit der Vorschubgeschwindigkeit der hergestellten Hülse 4 mitlaufende Kreissäge 7 längt die benötigten Hülsenabschnitte 4a auf das vom jeweiligen Kranzdurchmesser bestimmte Umfangsmaß ab.

Die gebildete Hülse 4 ist durch den Wassergehalt des Leims so weich und elastisch, daß sie sofort zu einem Ring umgeformt werden kann. Dies geschieht in einer nachfolgenden Formmaschine - (Fig. 2) mittels eines ringförmigen Formkörpers 8, in den die abgelängten Hülsenabschnitte 4a nacheinander eingelegt und an ihren in der Ringform aneinanderstoßenden Enden verbunden werden.

Anschließend wird der gebildete ringförmige Tragkörper 4b entsprechend Fig 4 in einer Wickelmaschine mittels eines Wickelkopfes mit streifenförmiger einseitiger Wellpappe 2e so lange spiralförmig weiterumwickelt, bis der gewünschte Querschnitt des Kernkörpers 1 erreicht ist. Der Kranzdurchmesser ist durch Einbau einer entsprechenden Form in die Wickelmaschine frei wählbar.

Mit einem zweiten Wickelkopf wird anschließend ein verrottbares Kreppapier 9 (Fig. 5) ebenfalls spiralförmig um den fertigen Kernkörper gewickelt. Der auf diese Art und Weise hergestellte Kranzrömer mit einem runden Querschnitt (Fig. 5) wird aus der Wickelmaschine maschinell entnommen und zum Trocknen gestapelt.

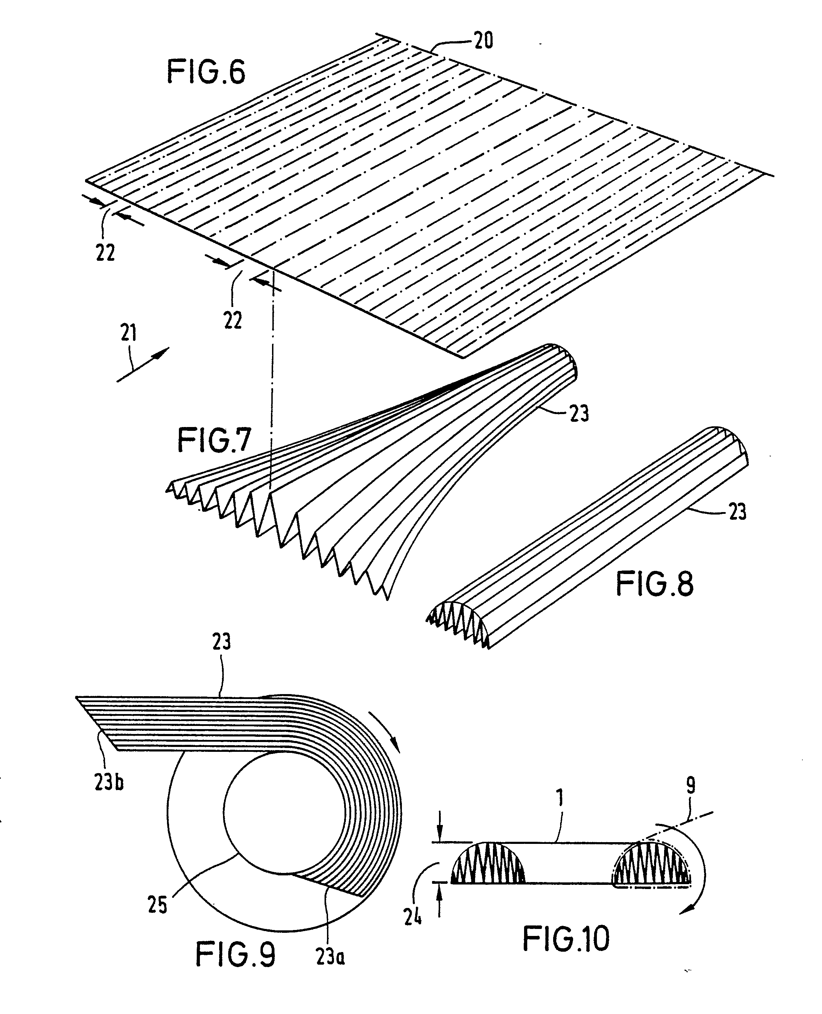

Bei dem in Fig. 6 bis 10 dargestellten Falten des Kernkörpers aus gerillten Wellpappenbögen 20 wird ebenfalls eine einseitige Wellpappe mit einer Wellenhöhe von etwa 2,5 oder etwa 3,8 mm verwendet.

Der entsprechend dem späteren Volumen des Kernkörpers 1 in Länge und Breite bemessene Wellpappenbogen 20 wird bei einer fortlaufenden Herstellung und Ablängung der einzelnen Bögen 20 von einer in Rollenform angelieferten Wellpappenbahn in Laufrichtung 21 derart gerillt, daß die Rillerabstände 22 nach dem Auffalten des Materials durch seitliches Zusammenschieben quer zur Laufrichtung entsprechend Fig. 7 und 8 den Querschnitt des Kranzes oder Kernkörpers bestimmen.

Bei üblichen Kranzdurchmessern von etwa 70 cm wird vorzugsweise eine etwa 2,45 m breite Bahn verwendet.

Die Rillerabstände 22 nehmen von den Rändern der Bahn oder des Bogens 20 zur Bahnmitte hin allmählich zu und sind so dimensioniert, daß nach dem Falten in Längsrichtung ein länglicher Formkörper 23 mit einem halbkreisförmigen Querschnitt entsteht. Bei einer maximalen Höhe des Kranzquerschnittes 24 von 7 cm beträgt dementsprechend der Rillerabstand 22 in der Mitte der Bahn 7 cm. Zwei benachbarte Rillerabstände 22 sind jeweils identisch, und die Rillerabstände 22 werden zu den Bahnrändern hin immer enger.

Der gerillte Bogen 20 kann auch nachträglich in einem Querschneider auf die erforderliche Länge geschnitten werden. Diese Länge ist durch den Kranzdurchmesser bestimmt und entspricht dem Kranzumfang.

In einer Falt-und Anleimmaschine wird dieser Bogen dann entsprechend Fig. 7 und 8 derart zickzackförmig gefaltet und beleimt, daß ein fächerförmiger Rohling 23 entsteht. Dieser Rohling 23 wird anschließend um einen Formzylinder 25 gezogen und damit in eine kreisrunde Form gebracht.

Bei der geschilderten Herstellungsweise entsteht ein Rohling 23 mit einem halbkreisförmigen Querschnitt. Die Enden 23a, 23b des Rohlings 23 werden zueinander passend schräg angeschnitten und mittels Dispersionskleber oder Heißschmelzkleber miteinander verbunden. Eine zusätzliche Stabilisierung der Verbindungsstellen mit Draht oder ähnlichem ist möglich.

In der nachfolgenden Wickelmaschine wird, wie bei dem ersten Ausführungsbeispiel beschrieben, der Kernkörper 1 mit Kreppapier 9 spiralförmig umwickelt, wie dies in Fig. 10 rein schematisch gezeigt ist.

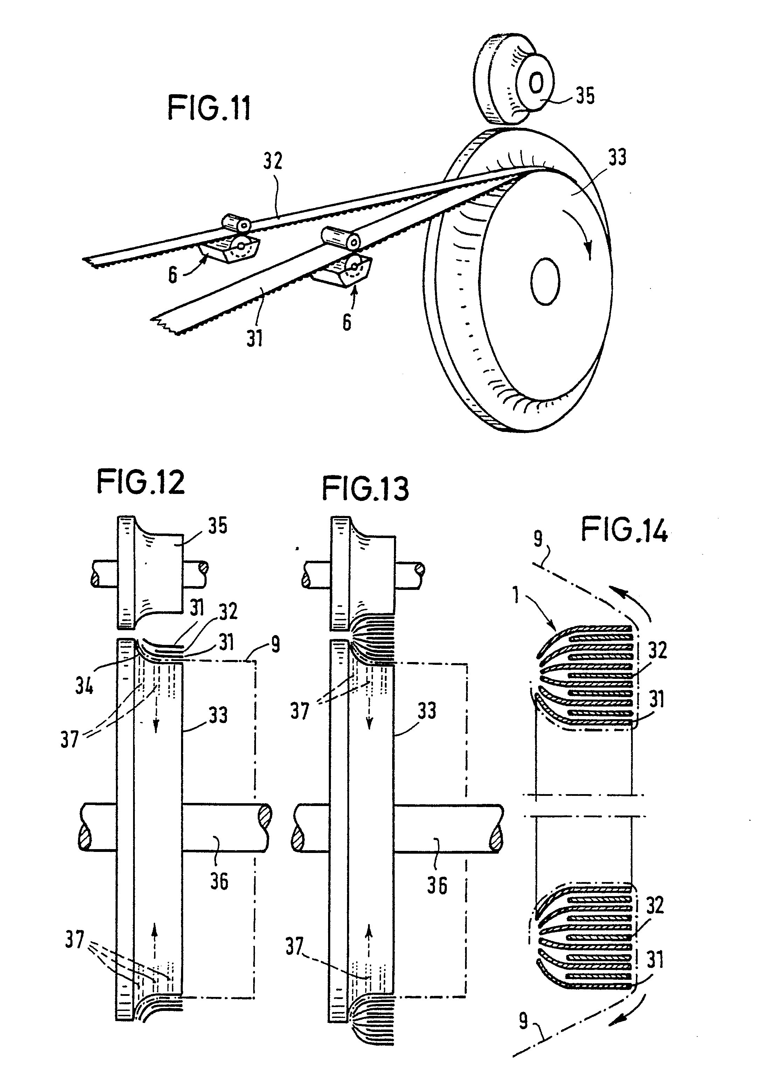

Bei dem in Fig. 11 bis 14 gezeigten Aufrollverfahren wird der Kernkörper oder Kranz 1 durch zylindrisches Wickeln aus zwei Streifen 31, 32 mit unterschiedlicher Breite hergestellt. Es wird ebenfalls eine einseitige Wellpappe mit 2,5 oder 3,8 mm Wellenhöhe eingesetzt.

Die in z.B. 10 cm breiten Rollen angelieferte Wellpappe wird am Beginn der Maschine in einer Längsschneidstation in zwei Bahnen unterschiedlicher Breite geschnitten, so daß bei einem Kernkörper oder Kranz mit einem Querschnitt von z.B. 14 cm die beiden Steifen 31, 32 jeweils 7 und 3 cm breit sind.

Beide Steifen 31, 32 laufen über ein Leimwerk 6, wo die jeweiligen Wellenseiten der Wellpappestreifen beleimt werden. Dieser Leim kann z.B. Wasserglas, Stärke (Dextrin) oder eine Dispersion sein.

Anschießend laufen die beiden Streifen 31, 32 einseitig bündig übereinander und werden auf einen Formzylinder 33 tangential geführt.

Es wird eine dem Kranzquerschnitt entsprechende Anzahl von in ihrer Breite abwechselnden Streifenlagen 31, 32 aufeinandergewickelt, bis der gewünschte Kranzumfang erreicht ist, wobei die parallel zur Wickelachse 36 entweder einseitig oder beidseitig vorstehenden Randbereiche der breiteren Wellpappenstreifen 31 entsprechend dem Umfang des Kernkörperquerschnittes etwa kreisbogenförmig angedrückt werden.

Durch eine entsprechende Formgebung des Formzylinders 33 mit außenliegendem Viertelkreisquerschnitt 34 und einer gleich geformten Andruckrolle 35 entsteht ein kreisrunder Kranz oder Kernkörper 1 mit einem Halbkreisquerschnitt, wobei der Umfang des Kranzes oder Kernkörpers 1 entsprechend den Darstellungen von Fig. 12 und 13 aus einander abwechselnden Streifen 31, 32 unterschiedlicher Breite nach und nach aufgebaut wird.

Nach Erreichen des endgültigen Durchmessers des Kranzoder Kernkörperquerschnittes wird der Kranz oder Kernkörper 1 mittels einer Auswurfvorrichtung aus der Form ausgestoßen und gelangt in die bereits oben im Zusammenhang mit Fig. 1 bis 5 beschriebene Wickelkopfmaschine, um mit Kreppapier 9 oder einem anderen verrottbaren dünnen Band umwickelt zu werden.

Eine andere Möglichkeit zum Umhüllen des Kernkörpers 1 mit Kreppapier 9 besteht, wie in Fig. 12 bis 14 im einzelnen gezeigt ist, darin, daß vor dem spulenförmigen Wickeln des Kernkörpers oder Kranzrohlings 1 auf den Umfang des Formzylinders 33 ein Kreppapierstreifen 9 mit einer Breite aufgelegt wird, die gleich dem Querschnittsumfang des herzustellenden Kernkörpers oder Kranzrohlings 1 ist. Der Kreppapierstreifen 9 wird dabei durch Erzeugen von Unterdruck an den Umfang des mit radialen Saugöffnungen 37 versehenen Formzylinders 33 angesaugt. Auf diesen Kreppapierstreifen 9 wird der Kranz oder Kernkörper 1 aufgewickelt und die erste Wellpappenlage 31 verklebt. Nach dem Fertigwickeln des Kernkörpers oder Kranzrohlings 1 wird dann der über den Kernkörper oder Kranzrohling seitlich hervorstehende Teil des Kreppapierstreifens 9 durch Druckluft von innen nach außen um den Kernkörper oder Kranzrohling vollständig herumgeschlagen und mit Leim verklebt.

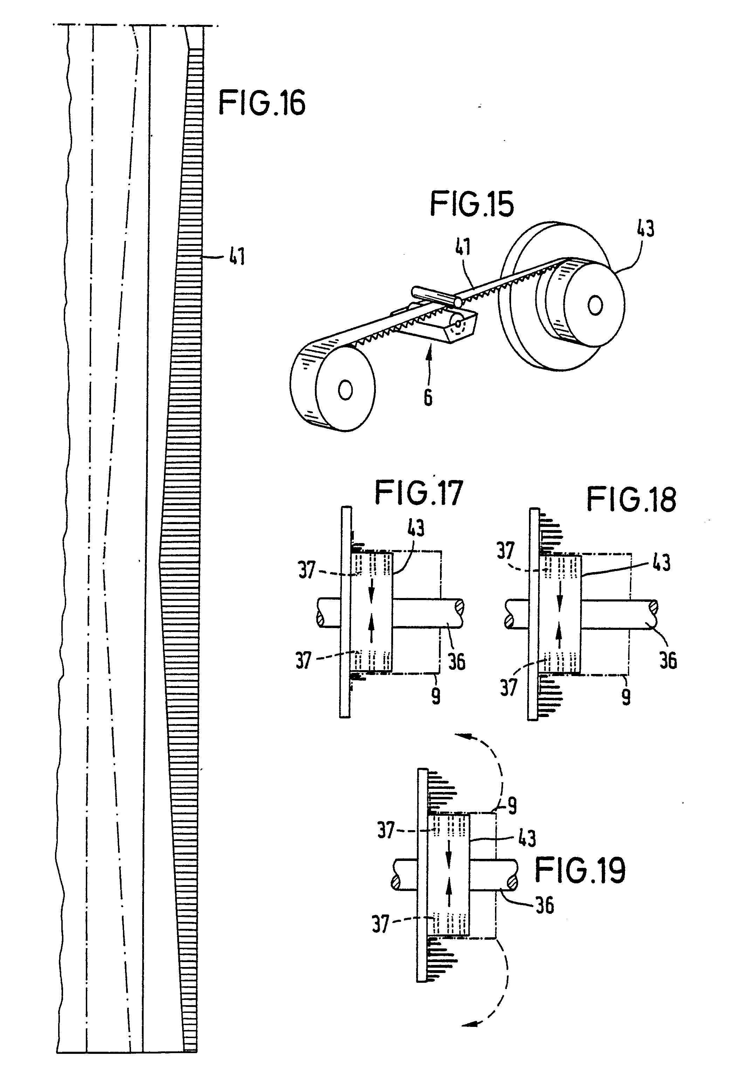

Ebenso wie bei den vorstehend beschriebenen Herstellungsverfahren kommt auch bei dem in Fig. 15 bis 19 gezeigten weiteren Aufrollverfahren zur Herstellung des Kernkörpers oder Kranzes 1 durch zylindrisches Wickeln aus einem Streifen 41 eine einseitige Wellpapper zum Einsatz mit z.B. 2,5 oder 3,8 mm Wellenhöhe in einer Rollenbreite von z.B. 60 cm.

Nach dem Abrollen wird der Wellpappenstreifen 41 in einer Längsschneidestation auf die jeweilige, vom Kranzdurchmesser abhängige, bis zur Mitte des Kranzdurchmessers zunehmende und dann wieder abnehmende Breite geschnitten.

In einem folgenden Leimwerk 6 werden die Wellenspitzen des Wellpappestreifens 41 beleimt, der jetzt auf die Wickeltrommel 43 gegeben und an dieser einseitig bündig geführt wird.

Die nicht gezeigte, an sich bekannte Schneideeinrichtung der Maschine ist elektrisch so gesteuert, daß sich die Breite des Wellpappestreifens 41 mit zunehmendem Kranzquerschnitt verändert.

Begonnen wird ein Kranz oder Kernkörper 1 mit einer Streifenbreite von z.B. 2 cm. Die Breite nimmt dann auf z.B. 7 cm zu und reduziert sich wieder zum Ende des Wickelvorganges auf 2 cm. So entsteht ein Kranz mit einem Querschnitt, der annähernd halbkreisförmig ist. Am Formzylinder 43 wird ein Kreppapierstreifen 9 durch Unterdruck festgehalten, wie dies bereits in Verbindung mit Fig. 12 bis 14 beschrieben worden ist. Wenn der notwendige Kranzdurchmesser erreicht ist, wird das Kreppier 9 durch Druckluft um den Kranz oder Kernkörper von innen nach außen herumgeschlagen, wie dies in Fig. 14 strichpunktiert dargestellt ist. Sodann wird der Kranz oder Kernkörper 1 mittels einer Auswurfvorrichtung auf ein Band ausgeworfen und wegtransportiert.

Um bei dem Herstellungsverfahren von Fig. 15 bis 19 möglichst materialsparend zu arbeiten, kann auch so vorgegangen werden, daß beim spulenförmigen Wickeln des Kernkörpers oder Kranzrohlings 1 aus in ihrer Breite zunächst zunehmenden und nach Erreichen der maximalen Querschnittsbreite des Kernkörpers 1 wieder abnehmenden Wellpappenstreifen 41 eine von einer Vorratsrolle ablaufende Wellpappenbahn bestimmter Breite in Längsrichtung derart schräglaufend geteilt wird, daß jeweils zwei oder mehrere im Wickelfortschritt entsprechend der zu-bzw. abnehmenden Streifenbreite gegeneinander versetzte Kernkörper 1 gleichzeitig hergestellt werden.

Bei dem im Zusammenhang mit Fig. 1 bis 5 beschriebenen Herstellungsverfahren aus einseitiger Wellpappe können Kränze oder Kernkörper ab einem Innendurchmesser von etwa 40 cm gewickelt werden.

Die weiteren drei beschriebenen Herstellungsverfahren gestatten einen wesentlich geringeren Kranzinnendurchmesser, der z.B. bei 15 cm liegen kann.

Dadurch ist es möglich, auch Zier-, Schmuck- und Adventskränze zu wickeln. Der maximal mögliche Durchmesser ist nahezu beliebig.

Der Kranzquerschnitt ist beim ersten Wickelverfahren zwangsläufig kreisrund. Beim Faltverfahren nach Fig. 6 bis 10 und bei den beiden Aufrollverfahren nach Fig. 11 bis 14 bzw. Fig. 15 bis 19 kann der Querschnitt kreisrund oder vorzugsweise halbkreisförmig sein. Es sind aber auch Aufrollverfahren möglich, die zu jedem beliebigen Querschnitt, z.B. auch viereckig, führen.

## Ansprüche

1. Kernkörper für Pflanzen-und Blumengebinde, insbesondere Kränze, aus einem verrottbaren, organisch abbaubaren, recyclingfähigen und damit umweltfreundlichen Material, **dadurch gekennzeichnet,** daß der Kernkörper (1) aus in mehreren ringförmigen, fest miteinander verbundenen Lagen (2a, 2b, 2c, 2d, 2e; 20; 31, 32; 41) angeordneter und/oder zusammengefalteter Wellpappe geformt ist.

2. Kernkörper nach Anspruch 1, **dadurch gekennzeichnet,** daß der Kernkörper (1) einen aus fortlaufenden bandförmigen Wellpappenstreifen (2a, 2b, 2c, 2d) nach Art eines Spiralrohres gewickelten und in Ringform gebrachten Tragkörper - (4b) aufweist, der mit weiteren Wellpappenstreifen - (2e) spiralförmig umwickelt ist. (Fig. 1 bis 5)

3. Kernkörper nach Anspruch 1, **dadurch gekennzeichnet,** daß er aus mindestens einem gerillten und quer zur Rillung zickzackförmig zusammengefalteten Wellpappenbogen (20) besteht, der in Ringform gebogen und an seinen aneinanderstoßenden Enden fest verbunden ist. (Fig. 6 bis 10)

4. Kernkörper nach Anspruch 1, **dadurch gekennzeichnet,** daß er aus in Umfangsrichtung der Ringform vom Innenumfang zum Außenumfang spulenförmig aufeinandergewickelten Wellpappenstreifen (31, 32; 41) besteht. (Fig. 11 bis 19)

5. Kernkörper nach Anspruch 4, **dadurch gekennzeichnet,** daß die spulenförmig aufeinandergewickelten Wellpappenstreifen (31, 32) eine wechselnde Breite quer zum Ringquerschnitt des Kernkörpers (1) derart aufweisen, daß jeweils breitere (31) und schmälere Streifen (32) einander abwechseln und die breiteren Streifen (31) in der Querschnittsebene des Kernkörpers (1) quer zu dessen Umfang am Außenumfang etwa kreisbogenförmig angedrückt sind. (Fig. 11 bis 14)

6. Kernkörper nach Anspruch 4, **dadurch gekennzeichnet,** daß die Breite der spulenförmig aufeinandergewickelten Wellpappenstreifen (41) vom Innenumfang des Kernkörpers (1) entsprechend der Form des Ringquerschnittes zum Außenumfang hin zunächst zunimmt und nach Erreichen der größten Querschnittsbreite bis zum Außenumfang des Kernkörpers (1) wieder kontinuierlich abnimmt. (Fig. 15 bis 19)

7. Kernkörper nach Anspruch 6, **dadurch gekennzeichnet** , daß er aus einem fortlaufenden Wellpappenstreifen (41) mit allmählich zunehmender und nach Erreichen der größten Querschnittsbreite wieder abnehmender Bandbreite spulenförmig gewickelt ist. (Fig. 15 bis 19)

8. Kernkörper nach einem oder mehreren der Ansprüche 3 bis 7, **dadurch gekennzeichnet,** daß er nur einen halbkreisförmigen Querschnitt hat.

9. Kernkörper nach einem oder mehreren der Ansprüche 1 bis 8, **dadurch gekennzeichnet,** daß er aus einseitiger Wellpappe geformt ist.

10. Kernkörper nach einem oder mehreren der Ansprüche 1 bis 9, **dadurch gekennzeichnet,** daß er mit verrottbarem Kreppapier (9) oder anderem porösen umweltfreundlichen Band außen umgeben ist.

11. Verfahren zum Herstellen von Kernkörpern für Pflanzen-und Blumengebinde, insbesondere Kränze, nach einem oder mehreren der Ansprüche 1 bis 10, **dadurch gekennzeichnet,** daß die den Kernkörper (1) bildenden Wellpappenstreifen oder -bahnen (2a, 2b, 2c, 2d, 2e; 20; 31, 32; 41) bei ihrer Verarbeitung beleimt und im noch feuchten Zustand gewickelt bzw. vorgeformt und in Ringform gebracht werden.

12. Verfahren zum Herstellen von Kernkörpern für Pflanzen-und Blumengebinde, insbesondere Kränze, nach Anspruch 11, **dadurch gekennzeichnet,** daß das den Kernkörper (1) bildende Vormaterial in einem kontinuierlichen Herstellungsprozeß fortlaufend geformt, entsprechend der Umfangslänge des herzustellenden Kernkörpers (1) oder Kranzrohlings abgelängt, in Ringform gebogen und an seinen aneinanderstoßenden Enden verbunden wird.

13. Verfahren nach Anspruch 11, **dadurch gekennzeichnet,** daß die aneinanderstoßenden Enden des vorgeformten ringförmigen Kernkörpers -(1) für eine satte gegenseitige Anlage abgeschrägt werden.

14. Verfahren nach Anspruch 11, **dadurch gekennzeichnet,** daß der Kernkörper (1) aus einseitiger streifenförmiger Wellpapper durch radiales spulenförmiges Umwickeln eines Formzylinders -(33, 43) hergestellt wird. (Fig. 11 bis 19)

15. Verfahren nach Anspruch 14, **dadurch gekennzeichnet,** daß Wellpappenstreifen (31, 32) unterschiedlicher Breite derart auf den Formzylinden (33) radial aufeinanderliegend aufgewickelt werden, daß jeweils auf einen innenliegenden Wellpappenstreifen (31) größerer Breite ein radial weiter außenliegender Wellpappenstreifen (32) geringerer Breite folgt, der wiederum mit einem Wellpappenstreifen (31) größerer Breite umwickelt wird, und jeweils weiter in abwechselnder Folge von - schmäleren (32) und breiteren Wellpappenstreifen - (31) bis zum Erreichen des maximalen Außenumfanges des herzustellenden Kernkörpers oder Kranzrohlings (1), wobei die parallel zur Wickelachse (36) entweder einseitig oder beidseitig vorstehenden Randbereiche der breiteren Wellpappenstreifen (31) entsprechend dem Umfang des Kernkörperquerschnittes etwa kreisbogenförmig angedrückt werden, so daß entweder ein Kernkörper oder Kranzrohling (1) mit einem halbkreisförmigen Querschnitt oder einem kreis-oder ellipsenförmigen Querschnitt hergestellt wird. (Fig. 11 bis 14)

16. Verfahren nach Anspruch 11, **dadurch gekennzeichnet,** daß der Kernkörper oder Kranzrohling (1) durch radiales spulenförmiges Umwickeln eines zylindrischen Formkörpers (43) mit einem in seiner Breite zunächst zunehmenden und nach Erreichen der maximalen Querschnittsbreite des Kernkörpers oder Kranzrohlings wieder abnehmenden Wellpappenstreifen (41) hergestellt wird. (Fig. 15 bis 19)

17. Verfahren nach Anspruch 16, **dadurch gekennzeichnet,** daß beim spulenförmigen Wickeln des Kernkörpers oder Kranzrohlings (1) aus in ihrer Breite zunächst zunehmenden und nach Erreichen der maximalen Querschnittsbreite des Kernkörpers wieder abnehmenden Wellpappenstreifen (41) eine von einer Vorratsrolle ablaufende Wellpappenbahn bestimmter Breite in Längsrichtung derart - schräglaufend geteilt wird, daß jeweils zwei oder mehrere im Wickelfortschritt entsprechend der zu- bzw. abnehmenden Streifenbreite gegeneinander versetzte Kernkörper (1) gleichzeitig hergestellt werden.

18. Verfahren insbesondere nach Anspruch 16 oder 17, **dadurch gekennzeichnet,** daß vor dem spulenförmigen Wickeln des Kernkörpers oder Kranzrohlings (1) auf den Umfang des Formzylinders (43) ein Kreppapierstreifen (9) mit einer Breite aufgelegt wird, die etwas größer als der Querschnittsumfang des herzustellenden Kernkörpers oder Kranzrohlings (1) ist, wobei der Kreppapierstreifen (9) durch Erzeugen von Unterdruck an den Umfang des mit radialen Saugöffnungen (37) versehenen Formzylinders (43) angesaugt wird, daß auf diesen Kreppapierstreifen (9) der Kranz oder Kernkörper (1) aufgewickelt und die erste Wellpappenlage verklebt wird, und daß nach dem Fertigwickeln des Kernkörpers oder Kranzrohlings der über den Kernkörper oder Kranzrohling (1) seitlich hervorstehende Teil des Kreppapierstreifen (9) durch Druckluft von innen nach außen um den Kernkörper oder Kranzrohling (1) vollständig herumgeschlagen und auf der flachen Kranzseite mit Leim verklebt wird.

FIG.1

FIG.2

FIG.3

FIG.4

FIG.5

FIG.6

20

22

22

21

FIG.7

23

23

FIG.8

23

23b

25

FIG.9

23a

1

9

24

FIG.10

FIG.11

FIG.12

FIG.13

FIG.14

FIG.16

41

FIG.15

41

43

6

FIG.17

43

37

37

36

9

FIG.18

37

43

37

36

9

9

37

43

FIG.19

36

37

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C- 464 837 (F. AURICH)<br>* ganzes Dokument *<br><br>---<br><br> | 1 | A 01 G 5/04 |
| A | DE-B-1 201 671 (MOSER-GLASER & CO. A.G.)<br>* ganzes Dokument *<br><br>----- | 1,11 | |

RECHERCHIERTE SACHGEBIETE (Int. Cl.4)

A 01 G 5/00
B 31 C 11/00
B 31 C 13/00
B 31 D 5/00

Der vorliegende Recherchenbericht wurde für alle Patentansprüche erstellt.

| Recherchenort | Abschlußdatum der Recherche | Prüfer |
|---|---|---|
| BERLIN | 15-06-1987 | WUNDERLICH J E |